# EUROPEAN PATENT APPLICATION

(11) **EP 1 354 681 A1**
(43) Date of publication of application: **22.10.2003**
(21) Application number: 02076478.3
(22) Date of filing: 15.04.2002
(51) Int. Cl.: B29B 13/02, B29B 17/00, B29C 43/00, B01F 5/24

(54) **Moulded product comprising a thermoplastic component and a particulate filler material and method for producing the same**

(71) Applicant: Bobo Holding B.V., 6871 TK Renkum (NL)
(72) Inventor: Erkelens, Simon, 6871 TK Renkum (NL); Erkelens, Joppe, 6871 TK Renkum (NL)
(74) Representative: van Westenbrugge, Andries

(57) **Abstract**

The present invention is concerned with a method of producing a moulded product which contains at least 30 wt.% of a thermoplastic component and at least 5 wt.% of a particulate filler material which is essentially inert under the conditions employed in the method, said method comprising:
a. heating the particulate filler material to a temperature that is substantially higher than the melting point of the thermoplastic component;
b. intimately mixing said heated filler material with thermoplastic particles that contain the thermoplastic component so as to allow heat transfer between the filler material and the thermoplastic particles;
c. allowing said heat transfer to cause at least 10 wt.% of the thermoplastic component to melt;
d. feeding the resulting mixture of filler material and at least partly molten thermoplastic particles into a moulding device;
e. moulding the mixture and
f. removing the moulded mixture from the mould.

## Description

### TECHNICAL FIELD OF THE INVENTION

One aspect of the present invention is concerned with a method of producing a moulded product which contains at least 30 wt.% of a thermoplastic component and at least 5 wt.% of a particulate filler material which is essentially inert under the conditions employed in the method, said method comprising mixing the filler material with thermoplastic particles that contain the thermoplastic component, melting at least part of the thermoplastic component and moulding the resulting mixture. The present method enables the preparation of composite moulded products that contain relatively inexpensive filler material and that may suitably employ recycled materials that contain appreciable amounts of thermoplastic polymers.

Another aspect of the invention relates to a moulded product containing at least 30 wt.% of a thermoplastic component and at least 5 wt.% of a particulate filler material.

### BACKGROUND OF THE INVENTION

Scrap polymeric materials collected from refuse sites, manufacturing operation wastes, household wastes, shredded automobiles and the like are commonly complex mixtures of diverse waste materials, including thermoplastic products, cured thermoset products, paper, metals, fibrous products, etc. It is, difficult and commonly uneconomic to sort and separate these scrap materials into the individual constituents before (re-)employing them. Polymeric materials are particularly difficult in this regard, since it is virtually impossible to sort scrap products into different types and grades of such polymers.

Polymeric materials are commonly produced through the polymerisation of a large variety of organic monomers that are well-known in the art. The resulting polymers can suitably be divided into two groups, i.e. those that melt at elevated temperature (thermoplastic polymers) and those that do not (thermosetting polymers).

Scrap materials that contain appreciable amounts of thermoplastic polymers may in principle be reused in moulded products by melting the thermoplastic polymers and moulding them into the desired shape. However, generally speaking such a reuse is not economic because it is often cheaper to use non-recycled polymers and because in many applications recycled materials yield inferior products, due to the inherent incompatibility of the various types of thermoplastic polymers.

In view of the poor biodegradability of most thermoplastic polymers and the vast quantities in which these materials are produced around the globe, there is a compelling need to find ways to recycle such polymers in an economic fashion.

A process of recycling and moulding scrap polymeric material that comprise a mixture of thermoplastic and thermosetting material into products of predetermined shape is known from US 5,075,057. The process described in the US patent comprises:
(a) shredding and milling the mixture to a fine particle size not greater than about 1 mm;
(b) homogenising the fine particle size mixture so formed into a free-flowing powdered form;
(c) warming the homogenised mixture to a temperature of at least 80 °C whilst maintaining free-flowing condition;
(d) dry blending the warm mixture with at least one additive material selected from reinforcing materials and fillers;
(e) compression moulding the blend at elevated temperatures and pressures.

According to a preferred embodiment of the process described in the US patent the reinforcing material is preheated to above the softening temperature of the thermoplastic components of the scrap material, typically a temperature from about 140-200 °C. Reinforcing materials specifically mentioned in US 5,075,057 include glass fibres, jute fibres, mineral fibres, synthetic polymeric fibres, carbon fibres and natural textile fibres

An important disadvantage of the process described in US 5,075,057 resides in the fact that it requires moulding of the powder blend at high temperatures and pressures.

### SUMMARY OF THE INVENTION

The inventor has discovered that it is possible to produce a moulded product which contains at least 30 wt.% of a thermoplastic component, optionally derived from scrap material, and at least 5 wt.% of a particulate filler material without the need to employ moulding at high temperatures and pressures.

Provided the particulate filler material is essentially inert under the conditions employed in the present method, it was found that preheated particular filler material can advantageously be used to convey sufficient heat to the thermoplastic component to at least partly melt it, allowing it to be moulded without the need to apply extra heat and/or high pressures.

The present method is extremely economic in terms of energy consumption and equipment requirements. Furthermore, the present method is highly flexible, allowing the use of a wide range of thermoplastic components and filler materials. Because the method does not require devices that employ equipment with rotating or otherwise moving elements, it is possible to use filler materials that are highly abrasive and that cannot normally be processed into moulded or extruded products that are based on thermoplastic components.

The properties of the products obtained with the present process are determined on the one hand by the thermoplastic component and on the other hand by the filler material. Depending on the nature of the filler material, it may impart strength and/or rigidity to the moulded product. By using waste products as the filler, there is a possibility of re-using useless and unesthetic wastes. The result is on the one hand a possible contribution to the improvement of the environment and, on the other hand, a material which has economic value, e.g. as a low cost construction material can be readily drilled, cut or machined and will readily accept and retain nails, screws, staples or other fasteners.

The method according to the invention further enables the manufacture of moulded products that have unique macro-structures. In case the method employs part-melting of the thermoplastic component, a moulded product is obtained that exhibits a special three-dimensional structure that has very interesting properties.

### DETAILED DESCRIPTION OF THE INVENTION

Accordingly, one aspect of the invention relates to a method of producing a moulded product which contains at least 30 wt.% of a thermoplastic component and at least 5 wt.% of a particulate filler material which is essentially inert under the conditions employed in the method, said method comprising:
a. heating the particulate filler material to a temperature that is substantially higher than the melting point of the thermoplastic component;
b. intimately mixing said heated filler material with thermoplastic particles that contain the thermoplastic component so as to allow heat transfer between the filler material and the thermoplastic particles;
c. allowing said heat transfer to cause at least 10 wt.% of the thermoplastic component to melt;
d. feeding the resulting mixture of filler material and at least partly molten thermoplastic particles into a moulding device;
e. moulding the mixture and
f. removing the moulded mixture from the mould.

The mixing in step b. is conducted in such a way that a substantially macro-homogeneous mixture is obtained. The term "macro-homogeneous mixture" as used herein, means that analysis of macro-samples of said mixture (e.g. samples of 50 grams) produce substantially reproducible analytical results, even though analysis of micro samples may reveal the presence of inhomogeneity.

The present method is particularly suitable for processing thermoplastic components that have a melting point in the range of 50-300°C, preferably in the range of 100-250°C. The thermoplastic component employed in the present method is suitably a polymer or a mixture of polymers. Typically, the polymers employed in accordance with the invention have a molecular weight in the range of 10,000 to 1000,000. In a particularly preferred embodiment the thermoplastic component is obtained from scrap material.

Examples of thermoplastic components which may suitably be employed in the present invention include: polyethylene, polypropylene, polystyrene, impact polystyrene, polyvinyl chloride, acrylonitrile-butadiene-styrene resins, expanded polypropylene, polyamides such as nylon 66, polyesters such as polyethylene terephthalate or polybutylene terephthalate, polyacrylates, polymethylmethacrylates, polyacrylonitrile, etc., and mixtures of two or more thereof

The present method allows the use of a wide variety of filler materials. However, in order to facilitate the transfer to the thermoplastic component of sufficient heat during a relatively short time interval, it is preferred to employ a filler material having a density in the range of 0.7-9 g/cm³, more preferably in the range of 1.1-5 g/cm³. In a particularly preferred embodiment of the invention the density of the filler material is sufficiently high to yield a moulded product with a density in excess of 1 g/cm³, meaning that said product may suitably be used in underwater applications or as floor tiles without the risk of floatation.

Examples of filler materials which may suitably be employed in the present method include sand, silica, glass, siliceous earth, ground mica, ash, metals, thermoset polymers and mixtures thereof. Particularly difficult materials to handle in complex scrap mixtures are (cured) thermoset polymers. These polymers will not melt for remoulding purposes, even after separation and isolation from scrap mixtures. Accordingly, there is a need for a process which will permit the recycling and reuse into useful products, of waste materials which include in their composition substantial quantities of thermoset polymers. Hence in a particularly preferred embodiment, the filler material comprises thermoset polymers, preferably at least 20 wt.% thermoset polymers.

Sand is another filler material which is particularly suitable for use in the present method. Sand is an abundantly available cheap filler material that is inert up to very high temperatures and which can suitably be used to obtain a moulded product with a relatively high density. The term "sand" as used throughout this document encompasses all kinds of silicates in a particulate form, including e.g. grind.

In order to achieve an efficient heat transfer it is advantageous to employ filler material that has been (pre)heated to a temperature in the range of 200-800°C, preferably in the range of 240-500°C. Generally the filler material should be preheated to a temperature which is at least 30°C higher, preferably at least 60°C higher and most preferably at least 80°C higher than the melting point of the thermoplastic component.

The benefits of the present invention are particularly pronounced if, immediately before they are mixed together, the filler material has a temperature which is at least least 50°C, preferably at least 100°C, more preferably at least 200°C and most preferably at least 250°C higher than that of the thermoplastic particles.

In a particularly preferred embodiment of the invention the method is operated in such a fashion that the thermoplastic particles do not completely melt during the process. Thus the energy requirement of the process may be limited and in addition, as will be explained below, the resulting products will exhibit unique desirable features. Preferably, in the present process, the heat transfer from filler material to said thermoplastic particles caused no more than 80 wt.% of the thermoplastic component to melt. More preferably the heat transfer causes from 20-70 wt.% of the thermoplastic component to melt. It is to be understood that in those cases where the thermoplastic component comprises a mixture of 2 or more thermoplastic materials with different melting points, the melting points referred to in the previous paragraph relate to the melting point of the highest melting thermoplastic component that needs to be melted to achieve the targeted percentage of melted thermoplastic component (e.g. 10 wt.%).

An important advantage of the present method resides in the possibility to employ thermoplastic component and filler material in widely varying weight ratios. Typically the thermoplastic component and filler material are admixed in a weight ratio within the range of 9:1 to 1:2. Preferably said weight ratio is within the range 5:1 to 1:2.

The thermoplastic particles employed in the present process preferably comprise at least 40 wt.%, more preferably at least 50 wt.% of the thermoplastic component. The remainder of the thermoplastic particles may suitably comprise components that are abundantly present in scrap polymeric materials, e.g. thermoset polymers, paper, fabric, wood etc. Upon admixture with the filler material the thermoplastic particles preferably have a volume weighted average diameter of 0.5-15 mm, more preferably of 1.0-8 mm.

The particle size of the filler material is not particularly critical, although it is noted that the efficacy of heat transfer will decrease with increasing volume. Generally, upon admixture with the thermoplastic component the particulate filler material has a volume weighted average diameter of 0.01 - 100 mm, more preferably of 0.1-50 mm.

As mentioned herein before, it is an important advantage of the present invention that it does not require the use of equipment with rotating elements such as extruders or kneaders. Thus, in a preferred embodiment, the heated filler material and the thermoplastic particles are mixed without the use of a mechanical mixing device. It was found that the heated filler material and the thermoplastic particles may effectively be mixed in free-fall under the influence of turbulence. In order to provide additional mixing energy a gas, having a temperature in excess of the melting point of the thermoplastic component, may be passed through the heated filler material and the thermoplastic particles while they are being mixed. Preferably said gas is substantially inert under the conditions employed during mixing and moulding. Examples of suitable gasses include air, nitrogen and carbon dioxide. Most preferably the heated gas is heated air. In order to facilitate the melting of the thermoplastic component it is advantageous to employ a heated gas that has temperature that is at least 50°C higher, preferably at least 100°C higher than the melting point of the thermoplastic component.

The process according to the invention preferably employs compression moulding, using standard compression moulding moulds or dies, double belt presses or calendering units. Unlike injection moulding and extrusion processes, compression moulding does not employ excessive heat, friction and shear. Thus, degradation of the polymeric materials, as well as mechanical destruction of the filler material is avoided. Furthermore, it is noted that the moulding compounds which can be used in injection moulding and extrusion/kneading processes can only tolerate limited amounts of fillers or reinforcements or other contaminants, because they are required to "flow" in a thermoplastic melt. These factors all contribute to reduced mechanical properties such as brittleness and low modules of elasticity, resulting from the damage to the reinforcing material, and the small amounts of reinforcing material which must necessarily be present.

In order to produce moulded products with an attractive appearance it was found to be advantageous to partly fill the mould with one or more decorative solid elements, before feeding the mixture of thermoplastic component and filler material into said mould, which one or more elements have been pre-heated to a temperature that is substantially higher than the melting point of the thermoplastic component. The decorative solid elements will become embedded in the surface of the moulded product. This embodiment of the invention enables the manufacture of e.g. tiles that exhibit a plurality of small pebbles on the surface, said pebbles conveying an attractive natural appearance to said tiles as well as extra resistance against wear.

As mentioned herein before the present method can be operated in relatively simple equipment, in particular because it does not require the application of high pressures during any stage of the process. Generally the pressures employed in the present process do not exceed 50 bar. During steps a. to d. of the present process pressures may suitably be kept below 25 or even 10 bar. The moulding operation is preferably performed without external heat transfer to the mixture in the mould.

Another aspect of the invention relates to a moulded product containing at least 30 wt.% of a thermoplastic component and at least 5 wt.% of a particulate filler material, said moulded product comprising a multitude of discrete, essentially homogenous sections comprising at least 30 wt.% of the thermoplastic component and essentially no filler material, which sections are enveloped by a continuous phase of material that contains at least 5 wt.% of the filler material.

The moulded product according to the invention combines macro-homogeneity with micro-inhomogeneity and may be obtained by only partly melting the thermoplastic particles in the present process. In said process the exterior of the thermoplastic particles will melt due to the heat transfer from the preheated filler material and said filler material will envelop said particles as a result of the mixing operation. During the subsequent moulding step the non-melted thermoplastic particles will become "glued together" by layers comprising the melted thermoplastic component and filler material. Due to the special micro-structure of the present moulded products it is possible to cleave them as is commonly done with bricks and construction materials made of concrete. In contrast, a moulded product of exactly the same composition, but with the filler material homogeneously dispersed throughout the product, is very hard to cleave, meaning that it will have to be cut or sawn.

The product of the invention can suitably contain air inclusions as these will reduce the weight of the moulded products, whilst retaining high impact and break strength. In case the moulded product comprises a high percentage of filler material of high density, such a weight reduction is particularly advantageous as it will facilitate the handling of the product. In particular if the present product is meant to be used as an alternative to construction materials that are made of concrete, the relatively low weight of the present moulded product in combination with its high impact and break strength is highly advantageous. Another advantage of the present moulded products versus products made of concrete resides in the lower brittleness of the present products in comparison to concrete.

The continuous phase in the present product that contains the filler material and the solidified melted thermoplastic component contains at least 5 wt.% of the filler material. The continuous phase in the present process is defined by the presence of filler material. The remainder of the product that contains no filler material is referred to in here as essentially homogeneous sections. The continuous phase in the present product may suitably contain at least 10 wt.% of the filler material, more preferably said continuous phase contains at least 25 wt.% of the filler material, and most preferably at least 40 wt.% of the filler material.

The essentially homogeneous sections in the present product preferably have a volume weighted average volume in the range of 0.5 µl to 15 ml, more preferably in the range of 5 µl to 1 ml. The moulded product generally has an apparent density in the range of 0.8-2.0 g/cm³. Preferably the apparent density is in the range of 1.1-1.8 g/cm³. The term "apparent density" refers to the overall density of the product, meaning that e.g. entrapped air affects the measured density.

The moulded product according to the invention may suitably take any shape or form. However, in a preferred embodiment, the product is moulded in the form of a construction material, in particular a slab, a brick, a tile, a hollow cube, or a Lego® brick.

The invention is further illustrated by means of the following examples:

### EXAMPLES

### Example 1

### Production of interlocking building bricks

Mixed thermoplastic waste, paper waste and dirt, obtained as a residue from a diaper recycling plant, was mixed with sand as a filler material according to the process of the present invention, to produce interlocking building blocks, of 80 x 80 x 160 mm weighing approx. 0.9 to 1.1 kg each.

Used diapers were collected and recycled in a process that is geared to recover the paper content of the diapers. As a residue from this process, a fraction of mixed plastic waste was obtained. This fraction contained Polyethene and Polypropylene film scrap and up to 10% paper. It also contained varying quantities of glue, super absorbent polymers, dirt and water. The total thermoplastic content in this fraction was between 85 and 90 wt.%.

The residue fraction was agglomerated in a high speed cutting mill, in which process the water was removed by evaporation. The resulting dry, irregular agglomerate had a typical particle size in the range of 1 to 10 mm.

The agglomerate so obtained was preheated to a temperature of approximately 80°C, before being introduced into a mixing device at a constant flow of approximately 1.5 kg/min. through a vibrating dosing channel of 100 mm width.

A filler material, consisting of sand with an average particle size of approximately 0.5 mm was preheated to a temperature of 450°C before being introduced into the same mixing device. The dosing of the sand took place from a metal coated container through a rectangular opening of approximately 2 mm wide and 100 mm long. The dosing speed was controlled by varying the width of the opening in such a way that in this example 1,5 kg/min of sand was introduced into the mixing device.

The sand and the agglomerate were mixed in a weight ratio of 1:1, in such a way that both streams came into contact immediately after leaving their respective dosing devices. Through a funnel the mixture was introduced into the mixing device which consisted of a vertical steel pipe of approximately 50 mm diameter and approximately 500 mm length.

Hot air of approximately 500°C was blown through this pipe at approximately 1 1/s from the bottom upwards (countercurrent), in order to cause turbulence and to prevent cooling. Upon exiting the mixing device, the mixture was allowed to fill a mould, which was positioned underneath the mixing device, in a free falling manner. The mould was made from plywood, covered on the inside with thin (0.5 mm) aluminium sheeting. The mould was shaped in such a way that each moulded brick had two knobs protruding from the upper surface and 1 cavity in the bottom surface. The knobs and cavity are arranged and dimensioned in such a way that the bricks can be fixated onto each other by inserting the knobs into the cavity . Thus the bricks may be mounted on top of each other in a vertical line, or, in such a way that they overlap each other by half, giving structural strength to a wall built therefrom.

After filling the mould, a lid was pushed into the mould to a predetermined depth, consistent with the final dimensions of the brick. The pressure applied was approximately 1 bar, for approximately 5 seconds. After cooling for approximately 30 minutes the brick was removed from the mould.

Photograph 1 shows the exterior of the brick so obtained. Photopraph 2 shows the image obtained from the interior of the brick after it had been cut through with a saw.:

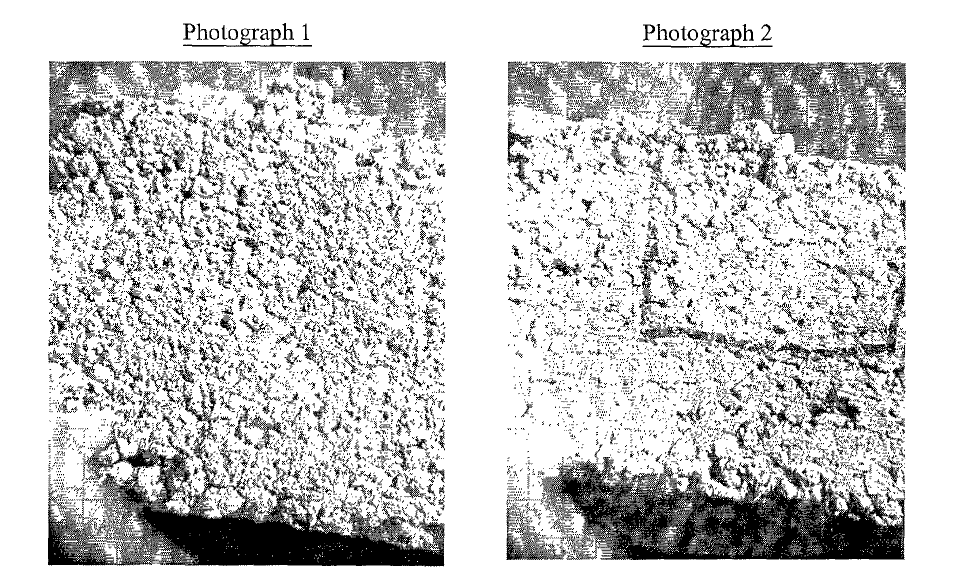

### Example 2

### Production of hollow bricks.

Using the ingredients of example 1, hollow bricks, open at top and bottom, weighing approximately 1.8 kg each, of 100 x 200 x 100 mm (bxlxh) outside dimensions, with an opening of 40 x 140 x 100 mm (bxlxh), were produced according to the process of the present invention.

The dosing of the agglomerate and the sand was adjusted to result in a mixture containing 35% agglomerate and 65% sand. The agglomerate was preheated to a temperature of 80°C. as in example 1, but this time the sand was preheated to a temperature of approximately 375°C.

The mould used was constructed in such a way as to yield a hollow, rectangular brick, with openings in both bottom and top. The design saves material and weight and allows the bricks to be used for the construction of e.g. garden walls that can be filled with earth and plants afterwards.

### Example 3

### Production of paving slabs with a moderated surface

In the same method of example 1, a mixed polymeric waste separated from household waste was used with sand as a filler material and gravel as a decorating material for the surface, to produce paving slabs in a process according to the present invention. The slabs were 150 x 150 x 40 mm, weighing approximately 1.1 kg each, with a decorative layer of gravel on one (top) surface.

Household waste collected in The Netherlands does not contain significant amounts of glass, chemicals or compostable waste, as these fractions are collected separately. This household waste is normally incinerated in dedicated ovens. As the high content of plastics with their high calorific value results in too high temperatures in these ovens, part of the plastic fraction is removed together with a paper fraction by wind sifting.

The material obtained from wind sifting is dried and agglomerated into particles with a typical diameter ranging from 0.5 to 5 mm. The agglomerate contains approximately 60 to 70 wt.% of polymeric materials, mainly packaging waste, including Polyethene, Polypropylene, Polystyrene, Polyesters, Polyamides, etc., as well as a large number of barrier polymers and adhesive layers. The other 30 to 40 wt.% consists mainly of paper dirt, food residues, etc.

This agglomerate was mixed with the same sand as used in example 1, in a ratio of 45 wt.% agglomerate and 55 wt.% sand. The agglomerate was preheated to a temperature of 80°C., the sand was preheated to a temperature of 425°C.

Before introducing the mixture into the mould, a thin layer of gravel was introduced into the mould. The gravel had a particle size ranging from 5 mm to 15 mm diameter and had been preheated to a temperature of 425°C before introduction into the mould.

Immediately after the gravel had been introduced, the mould was filled with the agglomerate/sand mixture, the lid was pushed into the mould, using a pressure of 0.5 bar for 5 seconds, to a predetermined depth in order to obtain slabs with a standard thickness. The resulting slab had a surface showing only the gravel, making it more attractive and providing extremely good wear resistance.

## Claims

1. A method of producing a moulded product which contains at least 30 wt.% of a thermoplastic component and at least 5 wt.% of a particulate filler material which is essentially inert under the conditions employed in the method, said method comprising:
a. heating the particulate filler material to a temperature that is substantially higher than the melting point of the thermoplastic component;
b. intimately mixing said heated filler material with thermoplastic particles that contain the thermoplastic component so as to allow heat transfer between the filler material and the thermoplastic particles;
c. allowing said heat transfer to cause at least 10 wt.% of the thermoplastic component to melt;
d. feeding the resulting mixture of filler material and at least partly molten thermoplastic particles into a moulding device;
e. moulding the mixture; and
f. removing the moulded mixture from the mould.

2. The method according to claim 1, wherein the thermoplastic component has a melting point in the range of 50-300°C.

3. The method according to claim 1 or 2, wherein the filler material is selected from the group consisting of sand, glass, silica, siliceous earth, ground mica, ash, metals, thermoset polymers and mixtures thereof.

4. The method according to any one of claims 1-3, wherein, immediately before they are mixed together, the filler material has a temperature which is at least 50°C, preferably at least 100°C, more preferably at least 200°C higher than that of the thermoplastic particles.

5. The method according to any one of claims 1-4, wherein the thermoplastic component and filler material are admixed in a weight ratio within the range of 9:1 to 1:2.

6. The method according to any one of claims 1-5, wherein the thermoplastic particles comprise at least 40 wt.%, preferably at least 50 wt.% of the thermoplastic component.

7. The method according to any one of claims 1-6, wherein the heated filler material and the thermoplastic particles are mixed in free-fall under the influence of turbulence.

8. The method according to any one of claims 1-7, wherein a gas, having a temperature in excess of the melting point of the thermoplastic component, is passed through the heated filler material and the thermoplastic particles while they are being mixed.

9. A moulded product containing at least 30 wt.% of a thermoplastic component and at least 5 wt.% of a particulate filler material, said moulded product comprising a multitude of discrete, essentially homogenous sections comprising at least 30 wt.% of the thermoplastic component and essentially no filler material, which sections are enveloped by a continuous phase of material that contains at least 5 wt.% of the filler material.

10. The moulded product according to claim 9, wherein the essentially homogeneous sections have a volume weighted average volume in the range of 0.5 µl to 15 ml.
